# EUROPEAN PATENT APPLICATION

(11) **EP 4 531 380 A1**
(43) Date of publication of application: **02.04.2025**
(21) Application number: 24197355.1
(22) Date of filing: 29.08.2024
(51) Int. Cl.: H04L 67/104, H04L 9/00, G06F 9/50, G06F 21/10

(54) **METHODS, APPARATUSES, DEVICES AND COMPUTER PROGRAMS FOR PEERS OF A BLOCKCHAIN NETWORK**

(30) Priority: 29.09.2023 US 202318477585
(71) Applicant: INTEL Corporation, Santa Clara, CA 95054 (US)
(72) Inventor: POORNACHANDRAN, Rajesh, Portland 97229 (US); GUIM BERNAT, Francesc, 08036 Barcelona (ES); CARRANZA, Marcos E., Portland 97229 (US); MARTINEZ-SPESSOT, Cesar, Hillsboro 97123 (US); DIVAN KOLLER, Mario Jose, Hillsboro 97124-5142 (US)
(74) Representative: 2SPL Patentanwälte PartG mbB

(57) **Abstract**

Various examples of the present disclosure relate to methods, apparatuses, devices, and computer programs for peers of a blockchain network. A method for distributing tasks to Web3 peers of a blockchain network comprises identifying, during execution of a smart contract, a plurality of tasks to be performed by one or more peers of the blockchain network, determining capabilities of the peers of the blockchain network, wherein at least one capability of at least one peer of the blockchain network is unlocked as an on-demand unlock of the capability at the respective peer, and distributing the plurality of tasks to the one or more peers based on the capabilities of the peers of the blockchain network.

## Description

### Background

Most popular blockchain technologies abstract hardware by exposing all their functionality through virtual machines, such is the case of the Ethereum Virtual Machine (EVM) on the Ethereum blockchain network. In there, there is no fine granular way of specifying requirements and its corresponding resources to be utilized for Web3.

### Brief description of the Figures

Some examples of apparatuses and/or methods will be described in the following by way of example only, and with reference to the accompanying figures, in which:
- Fig. 1a: shows a flow chart of an example of a method for distributing tasks to Web3 peers of a blockchain network;
- Fig. 1b: shows schematic diagram of an example of an apparatus or device for distributing tasks to Web3 peers of a blockchain network, of a Web3 peer comprising such an apparatus or device, and of a system comprising at least two peers of the blockchain network;
- Fig. 2a: shows a flow chart of an example of a method for a peer of a blockchain network;
- Fig. 2b: shows schematic diagram of an example of an apparatus or device for a peer of block chain network, of a peer comprising such an apparatus or device, and of a system comprising at least two peers of the blockchain network;
- Fig. 3: shows a schematic diagram of a gossip protocol-based resource activation;
- Fig. 4: shows a schematic diagram of a use case with heterogeneous capabilities that can be made homogenous; and
- Fig. 5: shows a diagram of an operational flow for on-boarding and resource activation of a new node using a peer consensus mechanism.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

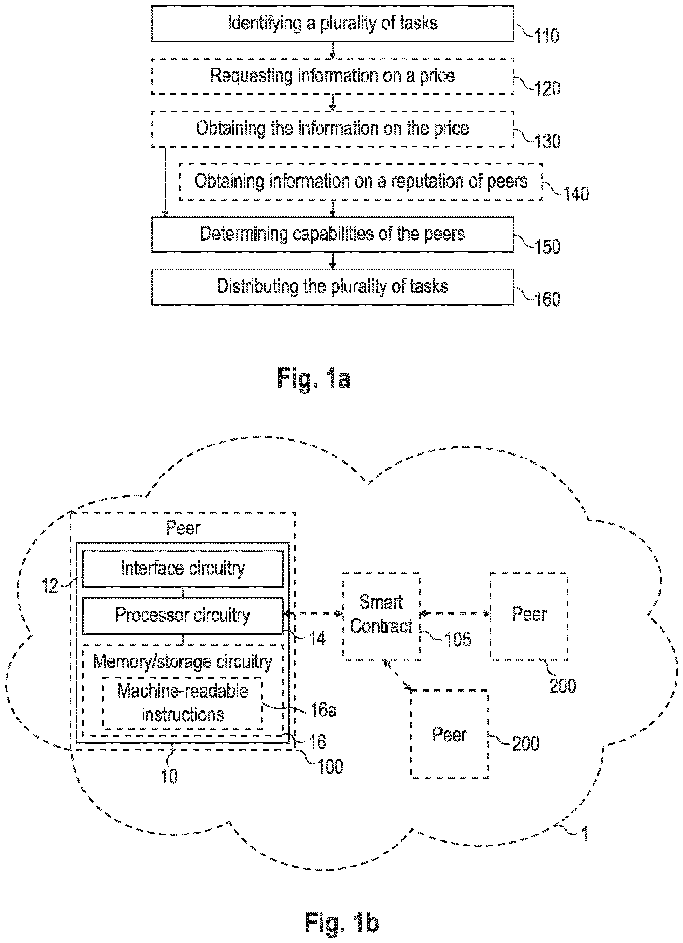

Fig. 1a shows a flow chart of an example of a method for distributing tasks to Web3 peers 200 (shown in Fig. 1b) of a blockchain network 1 (shown in Fig. 1b). The method comprises identifying 110, during execution of a smart contract 105 (shown in Fig. 1b), a plurality of tasks to be performed by one or more peers 200 of the blockchain network 1. The method comprises determining 150 capabilities of the peers of the blockchain network. At least one capability of at least one peer of the blockchain network is unlocked as an on-demand unlock of the capability at the respective peer. The method comprises distributing 160 the plurality of tasks to the one or more peers based on the capabilities of the peers of the blockchain network. For example, the method may be performed by the smart contract 105, e.g., by a host (e.g., a Web3 peer/node of the blockchain network) executing the smart contract.

Fig. 1b shows schematic diagram of an example of a corresponding apparatus 10 or device 10 for distributing tasks to Web3 peers 200 of the blockchain network 1. The apparatus 10 comprises an interface 12 for communicating with the Web3 peers 200 (i.e., nodes of the blockchain network). The apparatus 10 comprises machine-readable instructions 16a. The apparatus comprises processor circuitry 14, which may include a trusted execution environment, to execute machine-readable instructions inside or outside the trusted execution environment to perform the method of Fig. 1a. In other words, the processor circuitry may be configured to perform the method of Fig. 1a. For example, the processor circuitry 14 may be coupled with the interface circuitry 12. For example, the processor circuitry 14 may provide the functionality of the apparatus, in conjunction with the interface circuitry 12 (for exchanging information, e.g., with the Web3 peers 200). In some examples, the processor circuitry may further comprise memory/storage circuitry 16 for storing information, with the memory circuitry 16 being coupled to the processor circuitry 14. Likewise, the device 10 may comprise means for providing the functionality of the device 10. For example, the means may be configured to provide the functionality of the device 10. The components of the device 10 are defined as component means, which may correspond to, or implemented by, the respective structural components of the apparatus 10. For example, the device 10 of Fig. 1b comprises means for processing 14, which may correspond to or be implemented by the processor circuitry 14, means for communicating 12, which may correspond to or be implemented by the interface circuitry 12, and (optional) storage/memory 16, which may correspond to or be implemented by the memory/storage circuitry 16. In some examples, the functionality of the processor circuitry 14 or means for processing 14 may be implemented by the processor circuitry 14 or means for processing 14 executing machine-readable instructions. Accordingly, any feature ascribed to the processor circuitry 14 or means for processing 14 may be defined by one or more instructions of a plurality of machine-readable instructions. The apparatus 10 or device 10 may comprise the machine-readable instructions 16a, e.g., within the memory/storage circuitry 16 or within the TEE of the processor circuitry / means for processing 14.

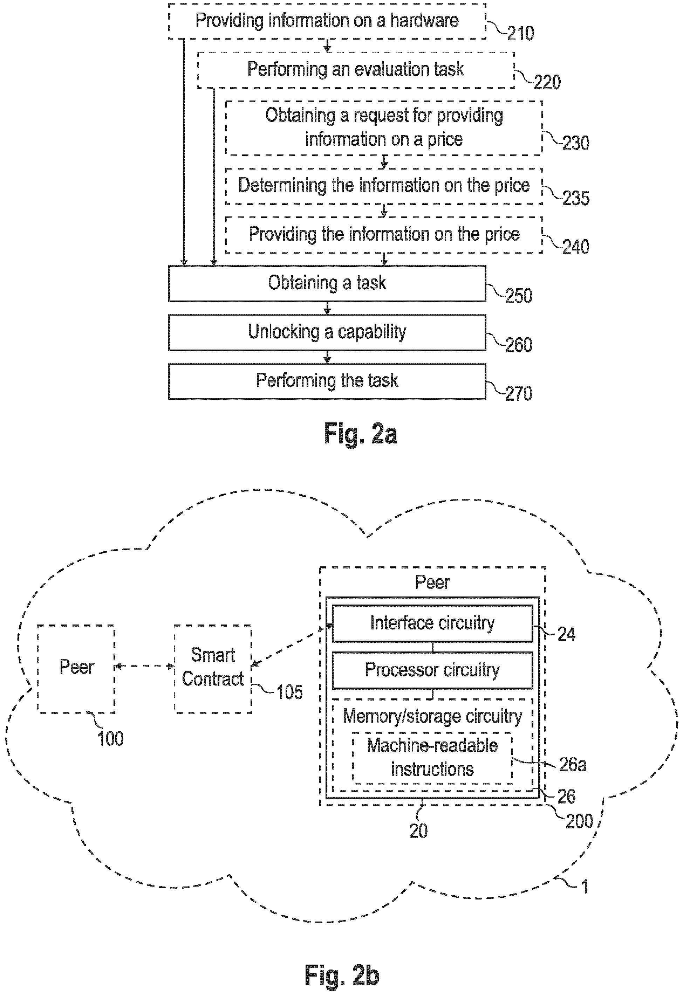

Fig. 1b further shows a computer system 100 (e.g., a Web3 peer or node of the blockchain network) comprising the apparatus 10 or device 10. Fig. 1b further shows a system comprising the apparatus 10 or device 10 shown in Fig. 1b and an apparatus 20 or device 20 introduced in connection with Fig. 2b. Fig. 1b further shows a system comprising a (Web3) peer/node 100 shown in Fig. 1b and one or more further (Web3) peers/nodes 200 introduced in connection with Fig. 2b.

Various examples of the present disclosure are based on the finding, that some computations are only feasible if the hardware being used to perform the computations has certain capabilities. For example, a trusted execution environment, such as Intel^{®} Software Guard Extensions, may be necessary to perform confidential computations. A large amount of graphics memory may be necessary to run inference on large machine-learning models. Vector extensions may be necessary to perform complex vector/matrix multiplications, e.g., for scientific computing. A high processor clock rate, coupled with a high number of per-clock instructions, may be necessary to achieve a desired latency. A large I/O (Input/Output) bandwidth may be required to distribute content. While such capabilities may exist in nodes used in the context of Web3 (i.e., nodes of a blockchain network, where interaction between nodes are based on the transfer of currency), they are usually not explicitly exposed, as the compute capabilities of certain nodes are hidden under layers and layers of virtualization and/or containerization. Therefore, if the Web3 is used for distributed computing, these special capabilities might not be used, as the node/peer distributing the work is not aware of the precise capabilities the other nodes are able to provide.

Furthermore, one trend in high-end computing is the advance of software-defined silicon (SDSi). In software-defined silicon, capabilities are included in the hardware component (e.g., central processing unit, CPU, graphics processing unit, GPU, accelerators etc.) by default. For example, the theoretical capabilities of a hardware component may be the same across different SKUs (stock-keeping units), but different subsets of capabilities may be enabled by default. This allows for market segmentation (to allow sale of both hardware with a large amount of capabilities and a base amount of capabilities), improves manufacturing efficiency (as the hardware being manufactured is the same, the yield may be improved faster) and may even enable aftermarket service revenue by giving customers the option to enable capabilities (i.e., features) on demand after the hardware is being sold, e.g., temporarily, or permanently.

In the proposed concept, both explicit exposure of capabilities (i.e., hardware features) and an on-demand activation of capabilities is used to improve the distribution of (computational) tasks to nodes/peers of a blockchain network.

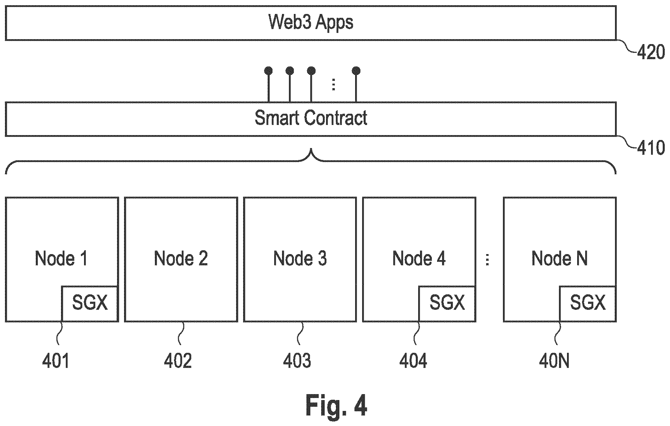

The administrative basis of the proposed concept is the smart contract being used to distribute the work. The method comprises identifying 110, during execution of a smart contract 105, a plurality of tasks to be performed by one or more peers of the blockchain network. In general, a smart contract is a programming code stored on a blockchain that automatically executes predefined actions when specific conditions are met. In the context of the present disclosure, in some implementations, the smart contract may be a framework or middleware that allows decentralized applications to distribute their tasks to peers/nodes (i.e., the following, the terms "peer" and "node" used interchangeably) of the blockchain network. A decentralized application, also known as a DApp, is a software application that operates on a decentralized network infrastructure, such as a blockchain. Unlike traditional applications, which are typically hosted on centralized servers, DApps distribute their processing power and data across a network of participating nodes. For example, the smart contract may guarantee to the decentralized application that the tasks being distributed are performed according to a capability requirement defined by the decentralized application. In other words, as shown in Fig. 4, a decentralized application (420 in Fig. 4) may use the smart contract (410 in Fig. 4) to distribute tasks to hosts (401-40N in Fig. 4). Alternatively, the smart contract may be the decentralized application (a smart contract is a special case of a decentralized application) comprising the tasks being distributed to the peers of the blockchain network. For example, the tasks being identified may be specified explicitly by the decentralized application, e.g., towards the smart contract in the first case, or as part of the smart contract in the second case. For example, each task may be distributed to a separate peer. Alternatively, one or more peers may perform more than one task of the plurality of tasks.

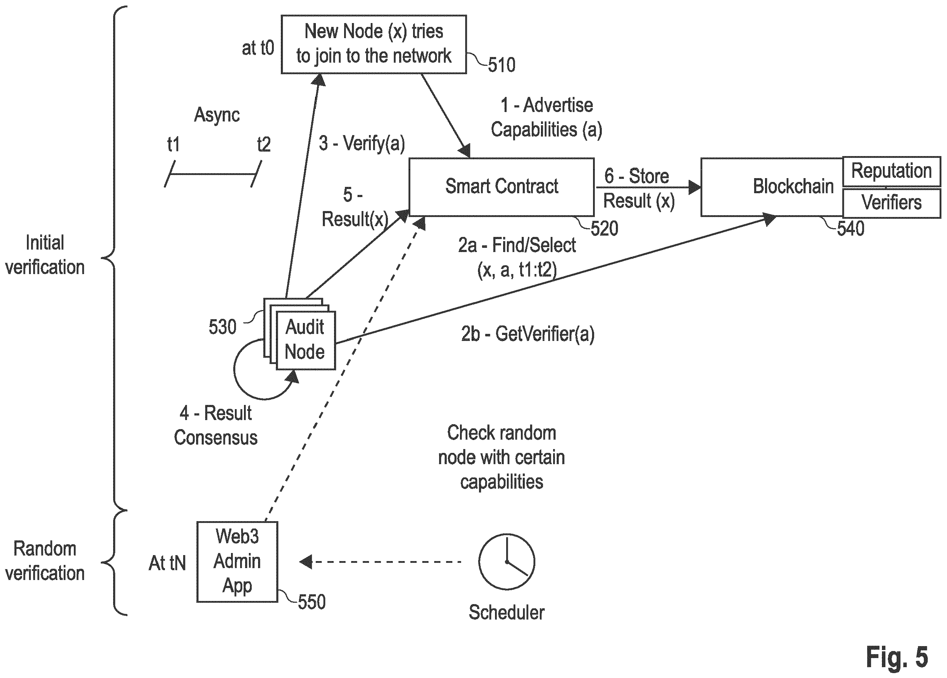

To make a decision on which peers the tasks are distributed to, the primary decision factor are the capabilities supported by the respective peers. For this purpose, the method comprises determining 150 (e.g., by the smart contract 105) the capabilities of the peers of the blockchain network. Determining the capabilities of the peers may be based on an on-boarding process, e.g., the onboarding process shown in Fig. 5.

In general, as shown in Fig. 5, the peers of the blockchain network may self-report their capabilities, as well as the hardware, firmware and/or software stack being used by the respective peers. However, as outlined above, in some cases, peers may have access to certain capabilities via an on-demand unlock, but not report such capabilities, as the operator is not convinced the on-demand unlock is worthwhile, or self-report capabilities that are available via on-demand unlock (and not unlocked, because the tasks so far have not been worthwhile for the operator). Moreover, in some cases, rogue nodes/peers may claim to possess certain capabilities to lure the smart contract into distributing a task to them (which is then sabotaged, e.g., by providing a late result, a false result, no result, or by exfiltrating confidential information). Therefore, the availability of capabilities may not only be self-reported, but also verified by independent verifiers (e.g., the "audit nodes" 530 shown in Fig. 5). In other words, the capabilities of a peer may be based on an evaluation of an evaluation task being performed by the peer, the evaluation being performed by a randomly selected evaluation peer of the blockchain network.

While such an evaluation is suitable for ascertaining that a peer has (or not) a capability, such an evaluation may take some time, during which time the peer is excluded from performing tasks. In some cases, this may be deemed an untenable situation, as the peers might only be available for a short period of time in any case (e.g., between more permanent assignments). Therefore, in the interim, a prediction may be used to predict the capabilities of a peer based on the hardware of the peer and based on prior knowledge on the capabilities of similar peers having the same or similar hardware. For example, prior to evaluation of the evaluation task, the capabilities of the peer may be based on a prediction of the capabilities of the peer based on hardware of the peer. Such a prediction may be performed using a machine-learning model, e.g., a classifier model, based on the hardware of the peer. In other words, the prediction of the capabilities of the peer may be based on a machine-learning model for predicting the capabilities of the peer based on the hardware of the peer. The various peers of the blockchain network may contribute to the machine-learning model, e.g., using federated learning, with the federated learning being coordinated using the distributed ledger of the blockchain network. In other words, the machine-learning model may be trained using federated learning.

In the following, a brief introduction to machine-learning is given. Machine learning refers to algorithms and statistical models that computer systems may use to perform a specific task without using explicit instructions, instead relying on models and inference. For example, in machine-learning, instead of a rule-based transformation of data, a transformation of data may be used, that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and associated training content information, the machine-learning model "learns" to recognize the content of the images, so the content of images that are not included of the training images can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model.

Machine-learning models are trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm, or a similarity learning algorithm. Classification algorithms may be used when the outputs are restricted to a limited set of values, i.e., the input is classified to one of the limited set of values. Regression algorithms may be used when the outputs may have any numerical value (within a range). Similarity learning algorithms are similar to both classification and regression algorithms but are based on learning from examples using a similarity function that measures how similar or related two objects are.

In the present context, the machine-learning model is used to make a prediction based on the hardware of the peer being evaluated. In particular, the machine-learning model may be used to predict, for each of a list of capabilities, whether the peer supports the capability - which is, for each capability, a binary classification. Accordingly, the machine-learning model may be a classifier, trained to predict, for each of a plurality of capabilities, whether the peer supports the capability. Training may be done using supervised learning, e.g., by using, for a plurality of nodes having known and evaluated capabilities, the hardware of the respective node as training input data and the capabilities of the node (e.g., encoded as binary vector representing whether a capability is supported) as desired training output. This training may be performed at different peers of the blockchain network (e.g., at the evaluation peers/audit nodes), and the result of the local training may be aggregated on the blockchain and integrated using federated learning (e.g., at each of the peers).

Machine-learning algorithms are usually based on a machine-learning model. In other words, the term "machine-learning algorithm" may denote a set of instructions that may be used to create, train, or use a machine-learning model. The term "machine-learning model" may denote a data structure and/or set of rules that represents the learned knowledge, e.g., based on the training performed by the machine-learning algorithm. In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e., to achieve a desired output for a given input. In at least some embodiments, the machine-learning model may be deep neural network, e.g., a neural network comprising one or more layers of hidden nodes (i.e., hidden layers), preferably a plurality of layers of hidden nodes.

In the present disclosure, reference is made to various capabilities of the peers. In general, these capabilities may be hardware capabilities of the peers. For example, the capability being unlocked may be a hardware capability of the peer. For example, the capabilities may include at least one of one or more computational capabilities, one or more memory-based capabilities and one or more transmission bandwidth-based capabilities. Similarly, the capability being unlocked may be a computational capability (e.g., a number or type of core assigned to the task, use of a trusted execution environment, an operating frequency or boost frequency), a memory-based capability (e.g., an amount of memory assigned to the task) or a transmission bandwidth-based capability (e.g., a number of Peripheral Component Interface express lanes assigned to an I/O card). In some examples, a capability may also be a firmware capability (e.g., a firmware version of a hardware capability) or a software capability (e.g., a driver version of a driver being used to access a hardware capability).

While a peer (or the host thereof) may support a number of capabilities, the present disclosure focuses on capabilities that can be unlocked on-demand. For example, at least one capability of at least one peer (as determined 150 by the smart contract) of the blockchain network is (a capability that is) unlocked as an on-demand unlock of the capability at the respective peer. Through the on-demand unlock, the capability is enabled and can be used to perform a task being distributed by the smart contract. In some examples, such an on-demand unlock may be permanent (e.g., usable at any time after the on-demand unlock is performed). In many examples, however, the capability may be unlocked temporarily for the duration of the task. For example, a consensus-based time synchronization protocol may be used to ensure that the capability is enabled (and disabled) synchronously across the peers performing the plurality of tasks.

In addition to the capabilities supported by a peer, at least one of the following two factors may determine which peer(s) is/are selected for performing a task - the cost (i.e., the price the respective peer wants to be paid via a Web3 mechanism, i.e., via the blockchain), and the reputation of the node.

In general, different peers may set different prices for performing a task, i.e., for providing access to their capability (or capabilities) for a pre-defined time interval. The smart contract may ask the peers to name their price for performing the tasks to be distributed. In other words, as further shown in Fig. 1a, the method may comprise requesting 120 (e.g., by the smart contract 105) information on a price to be paid for the respective tasks from at least a subset of peers of the blockchain network, e.g., using a gossip protocol (in a peer-to-peer manner). For example, the price to be paid may depend on the costs the peer incurs for performing the task, e.g., for electricity, write-downs, software licenses, and, of course, the cost for unlocking the on-demand capability. For example, the price of the at least one peer may be based on a cost of the on-demand unlock of the capability at the respective peer. The method may comprise obtaining 130 (e.g., by the smart contract 105) the information on the price to be paid by the smart contract to the peers of the blockchain network for the respective tasks. The information on the price to be paid (by the smart contract, or by the decentralized application using the smart contract) may then be used as a factor on how to distribute the tasks (with a preference towards peers offering a lower price). In other words, the plurality of tasks being distributed further based on the price to be paid by the smart contract to the peers of the blockchain network for the respective tasks.

Another factor is the reputation of the peers. For example, the method may comprise obtaining 140 (e.g., by the smart contract 105) information on a reputation of the peers of the blockchain network. This reputation may further be taken into account when distributing the tasks, e.g., with peers having a high/good reputation being preferred over peers having a low/bad reputation. In other words, the plurality of tasks may be distributed further based on the reputation of the peers of the blockchain network. This reputation may be based on prior actions of the peer: if the peer has successfully completed other tasks, its reputation may be high. If the peer has failed to complete previous tasks (or lied about supported capabilities), its reputation may be low. In other words, the reputation of the peers may be based on a performance of the peers during previous tasks. As, in the proposed concept, various mechanisms are implemented with the help of the distributed ledger, the reputation of a peer may also be stored on the distributed ledger, and the information on the reputation may be obtained from the distributed ledger. In other words, the reputation of the peers may be obtained according to information on a completion of previous tasks stored on a distributed ledger of the blockchain network.

In some examples, a scoring system may be employed to represent the reputation of the peers. For example, each peer may start with a default (medium or neutral) reputation score, which may be adjusted every time the peer completes (or fails to complete) a task, delivers a false result, or lies about a capability. For example, the reputation of a peer may be based on the reputation score, the reputation score of a peer starting with a default reputation score. The reputation score may be increased after successful completion of a task and decreased after a failure to complete a task in time (or delivery of a false result or advertising an unsupported capability). If the score gets too low, a peer may be removed from consideration. For example, a peer may be removed from consideration for distributing tasks if the reputation score falls below a threshold value.

Based on these factors (capabilities, and optionally price and/or reputation), the tasks are then distributed (e.g., by the smart contract 105) 160 to the peers. For example, the distributed application may be provided with a list or set of peers to which the respective task(s) have been distributed. In some examples, some amount of overprovisioning may be employed to account for transient network errors, random failures and/or rogue nodes.

The interface circuitry 12 or means for communicating 12 may correspond to one or more inputs and/or outputs for receiving and/or transmitting information, which may be in digital (bit) values according to a specified code, within a module, between modules or between modules of different entities. For example, the interface circuitry 12 or means for communicating 12 may comprise circuitry configured to receive and/or transmit information.

For example, the processor circuitry 14 or means for processing 14 may be implemented using one or more processing units, one or more processing devices, any means for processing, such as a processor, a computer or a programmable hardware component being operable with accordingly adapted software. In other words, the described function of the processor circuitry 14 or means for processing may as well be implemented in software, which is then executed on one or more programmable hardware components. Such hardware components may comprise a general-purpose processor, a Digital Signal Processor (DSP), a micro-controller, etc.

For example, the memory/storage circuitry 16 or memory/storage 16 may comprise at least one element of the group of a computer readable storage medium, such as a magnetic or optical storage medium, such as a random access memory, such as dynamic random-access memory (DRAM), a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the method, apparatus 10, device 10, peer 100, peer 200 and blockchain network 1 are mentioned in connection with the proposed concept or one or more examples described above or below (e.g., Fig. 2a to 5). The method, apparatus 10, device 10, peer 100, peer 200 and blockchain network 1 may comprise one or more additional optional features corresponding to one or more aspects of the proposed concept, or one or more examples described above or below.

Fig. 2a shows a flow chart of an example of a method for a peer 200 (shown in Fig. 2b) of a blockchain network 1 (shown in Fig. 2b). The method comprises obtaining 250 a task to be performed by the peer from a smart contract 105. The method comprises unlocking 260 a capability of the peer using an on-demand unlock of the capability. The method comprises performing 270 the task using the unlocked capability. For example, the method may be performed by the peer 200, e.g., by a computer system hosting the peer/node 200.

Fig. 2b shows schematic diagram of an example of an apparatus or device for a peer of block chain network. The apparatus 20 comprises an interface 22 for communicating with the Web3 peer 100, or smart contract 105 hosted by the Web3 peer 100. The apparatus 20 comprises machine-readable instructions 26a. The apparatus comprises processor circuitry 24, which may include a trusted execution environment, to execute machine-readable instructions inside or outside the trusted execution environment to perform the method of Fig. 2a. In other words, the processor circuitry may be configured to perform the method of Fig. 2a. For example, the processor circuitry 24 may be coupled with the interface circuitry 22. For example, the processor circuitry 24 may provide the functionality of the apparatus, in conjunction with the interface circuitry 22 (for exchanging information, e.g., with the Web3 peer 100 or smart contract 105). In some examples, the processor circuitry may further comprise memory/storage circuitry 26 for storing information, with the memory circuitry 26 being coupled to the processor circuitry 24. Likewise, the device 20 may comprise means for providing the functionality of the device 20. For example, the means may be configured to provide the functionality of the device 20. The components of the device 20 are defined as component means, which may correspond to, or implemented by, the respective structural components of the apparatus 20. For example, the device 20 of Fig. 2b comprises means for processing 24, which may correspond to or be implemented by the processor circuitry 24, means for communicating 22, which may correspond to or be implemented by the interface circuitry 22, and (optional) storage/memory 26, which may correspond to or be implemented by the memory/storage circuitry 26. In some examples, the functionality of the processor circuitry 24 or means for processing 24 may be implemented by the processor circuitry 24 or means for processing 24 executing machine-readable instructions. Accordingly, any feature ascribed to the processor circuitry 24 or means for processing 24 may be defined by one or more instructions of a plurality of machine-readable instructions. The apparatus 20 or device 20 may comprise the machine-readable instructions 26a, e.g., within the memory/storage circuitry 26 or within the TEE of the processor circuitry / means for processing 24.

Fig. 2b further shows a computer system 200 (e.g., a Web3 peer or node of the blockchain network) comprising the apparatus 20 or device 20. Fig. 2b further shows a system comprising the apparatus 10 or device 10 introduced in connection with Fig. 1b and an apparatus 20 or device 20. Fig. 1b further shows a system comprising a (Web3) peer/node 100 introduced in connection with Fig. 1b and one or more further (Web3) peers/nodes 200.

While Figs. 1a and 1b relate to the coordinating side of the distribution of tasks, Figs. 2a and 2b relate to the Web3 peer(s) being used to perform the actual tasks, i.e., the peers using the on-demand unlock of at least on capability. As outlined in connection with Figs. 1a and 1b, before such a peer 200 receives a task to be performed, various preparatory tasks may be performed.

For example, to even consider the peer 200 for performing tasks, the peer 200 may self-advertise its capabilities, and in particular the hardware being included in the peer 200, towards the blockchain network, and in particular towards the smart contract. For example, the method may comprise providing 210 information on a hardware (and, optionally, information on the capabilities, information on a firmware version, and/or information on a software version) of the peer 200 for the smart contract (e.g., by storing the information on the distributed ledger). This information may be used to predict the capabilities of the peer 200, and thus be a basis for the distribution of tasks to the peer. In other words, the task to be performed may be obtained based on a prediction of capabilities of the peer, with the prediction being based on the information on the hardware of the peer.

To prove to the smart contract that the peer 200 has certain capabilities (beyond the prediction of its capabilities), the peer 200 may perform an evaluation task. For example, the method may comprise performing 220, by the peer 200, the evaluation task. For example, the evaluation task (e.g., a script) may be stored on the distributed ledger (as shown in connection with Fig. 5). For example, for each capability being proven towards the smart contract (i.e., verified), a pre-defined evaluation task may be performed. For example, a result of the evaluation task may be provided to an evaluation node/peer (i.e., the audit node(s) 530 of Fig. 5), which may confirm (or deny) towards the smart contract whether the peer 200 has successfully completed the evaluation task. The smart contract may then store information on the completion of the evaluation task on the distributed ledger, or the peer 200 may store the information on the completion of the evaluation task on the distributed ledger and the evaluation nodes/peers may confirm the information on the completion on the distributed ledger. The evaluation task may prove the capability or capabilities of the peer 200 towards the smart contract, such that the peer 200 is selected for a task based on said capability or capabilities. In other words, the capabilities of the peer (as proven towards the smart contract) may be based on an evaluation of the evaluation task performed by the peer. Consequently, the task to be performed may be obtained based on capabilities of the peer (as proven towards the smart contract).

Another factor is, as discussed in connection with Figs. 1a to 1b, the amount of digital currency the peer 200 wants to charge for performing the task. For example, the method may comprise obtaining 230 a request for providing information on a price to be paid (by the smart contract 105 or distributed application to the peer 200) for performing the task from the smart contract 105. This price depends on the operating costs and write-downs of the peer 200, the costs of enabling the capability, and a markup (to create a profit margin, and to compensate for periods without paid task completions). For example, the method may comprise determining 235 the information on the price to be paid for performing the task based on a cost of the on-demand unlock of the capability (and based on the operating costs and desired markup, for example). The method may comprise providing 240 the information on the price to be paid for performing the task to the smart contract. As a result, the peer 200 receives the task (or fails to receive a task) according to the information on the price provided to the smart contract. In other words, the task to be performed may be obtained in response to the provided information on the price to be paid for performing the task.

Once the smart contract has selected the peer 200 for a task, the peer 200 obtains 250 the task to be performed by the peer from the smart contract 105. In some cases, the capabilities already enabled at the peer 200 may suffice for performing the task. In some cases, which are the focus of the present disclosure, performing the task may require enabling at least one capability. Therefore, the method comprises unlocking 260 the capability of the peer using an on-demand unlock of the capability. For example, in case the capability is hardware capability, the capability may be unlocked using a software defined silicon-technique, e.g., using Intel^{®} OnDemand. If the capability is a firmware or software capability, a required firmware or software may be installed and/or licensed, and the respective firmware capability or software capability (e.g., feature) may be unlocked. The method then comprises performing 270 the task using the unlocked capability. If the task has a result, the peer 200 may then provide the result of the task to the smart contract and/or distributed application. If the task does not require providing a result to the smart contract or distributed application, no result might be provided.

As the distribution of tasks to the peer 200 may depend on the reputation of the peer 200, the peer 200 may document completion of the task on the distributed ledger. In other words, the method may comprise storing information on a completion of the task on the distributed ledger of the blockchain network after performing the task. For example, the smart contract or distributed ledger, or an audit node, may confirm the information on the completion of the on the distributed ledger.

The interface circuitry 22 or means for communicating 22 may correspond to one or more inputs and/or outputs for receiving and/or transmitting information, which may be in digital (bit) values according to a specified code, within a module, between modules or between modules of different entities. For example, the interface circuitry 22 or means for communicating 22 may comprise circuitry configured to receive and/or transmit information.

For example, the processor circuitry 24 or means for processing 24 may be implemented using one or more processing units, one or more processing devices, any means for processing, such as a processor, a computer or a programmable hardware component being operable with accordingly adapted software. In other words, the described function of the processor circuitry 24 or means for processing may as well be implemented in software, which is then executed on one or more programmable hardware components. Such hardware components may comprise a general-purpose processor, a Digital Signal Processor (DSP), a micro-controller, etc.

For example, the memory/storage circuitry 26 or memory/storage 26 may comprise at least one element of the group of a computer readable storage medium, such as a magnetic or optical storage medium, such as a random access memory, such as dynamic random-access memory (DRAM), a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the method, apparatus 20, device 20, peer 200, peer 100 and blockchain network 1 are mentioned in connection with the proposed concept or one or more examples described above or below (e.g., Fig. 1a to 1b, 3 to 5). The method, apparatus 20, device 20, peer 200, peer 100 and blockchain network 1 may comprise one or more additional optional features corresponding to one or more aspects of the proposed concept, or one or more examples described above or below.

Various examples of the present disclosure relate to a concept for synchronous on-demand capabilities (e.g., using Intel^{®} On Demand), which may use consensus-based time synchronization for Web3 platform resource activation.

In many implementations of Web3 Virtual Machines (VMs), there is no means to dynamically scale the compute, storage, and communication capabilities synchronously across N Web3 peers based on the Smart Contractual obligations. Specifically, such Virtual Machines may lack a mechanism to help fill a system-level hardware/software requirement gap across the cluster/fleet of Web3 nodes agreeing to accomplish a task. With such VMs, content may be adapted to execute workloads, basically limiting execution to the lowest common denominator among the fleet participants, which may compromise quality of service. In some cases, these shortcomings may be addressed by exposing the corresponding interfaces on private block-chains, or via layer 2-implementations, but this may be treated as premium capabilities and so its utilization requires a more advanced mechanism.

The focus of the proposed concept is not on re-inventing blockchain concepts. Existing blockchain mechanisms are used, by using the blockchain as a public distributed ledger (in the future, a different mechanism ban be used), for transaction tracking with a consensus approach.

Various examples of the present disclosure are based on temporarily unlocking capabilities at the peers on demand, e.g., synchronously, for example using Intel^{®} On Demand. This may involve time-stamp synchronization through a Web3/blockchain based consensus. A flexible consumption mechanism is provided with the ability to fill the gap by unlocking and scaling performance and capacity of platform hardware or software ingredients in response to real-time demand when there are not enough nodes with the same capabilities. For a given Web3 DApp (Distributed Application) that is trying to accomplish a task by involving N Web3 participants, based on the agreed Smart Contract for the given transaction, (all of) the Web3 peer nodes may temporarily activate required capabilities in both hardware and software (e.g., Extra Cores, SGX (Intel^{®} Software Guard Extensions, a Trusted Execution Environment), GPU (Graphics Processing Unit), etc.) synchronously (which may provide service-based revenue to platform vendors). The proposed mechanism leverages activation of on-demand capabilities, e.g., using Intel OnDemand, and enables upgrading a group/fleet of devices for a time-bound period. This mechanism may help fill the gap on system-level requirements when there are not enough nodes with the same capabilities. For example, resources (i.e., capabilities) may include P(Performance)-Core vs. E(Efficiency)-Core assignment, frequency of cores/uncores (functionalities of a CPU that are not part of the cores)/modules, I/O (Input/Output) Speed/Feeds, a gradient of security protocol acceleration, etc.

To avoid un-necessary over subscription of resources across all the nodes, in some examples of the proposed concept, "Gossip Protocol" or "Federated Learning" approaches may be used to enable a smart estimation of resource unlock for the future based on past learning from similar nodes. This may be useful in workload placement as well as handling existing nodes leaving, or new nodes on-boarding based on an amount of residual work to be accomplished.

An example use case may include high-fidelity media streaming across X publishers and Y subscribers, in a Web3 model, based on the content to be authored, enhanced, and distributed in a crowd sourced manner. This may require the determination of resource requirement in terms of compute, networking, etc., dynamically. If the participants devices do not have sufficient resources to provide the required scale-up, other approaches take a path to compromise on quality or density of the users, leading to poor user experience and/or revenue loss. With the proposed concept, the crowd-sourced Web3 devices can lean on on-demand capability enabling schemes, such as Intel^{®} OnDemand to unlock more hardware and software (e.g., GuC, an engine for workload scheduling on Intel^{®} GPUs/HuC, a firmware for providing High Efficiency Video Coding) for enhanced processing as well as monetization.

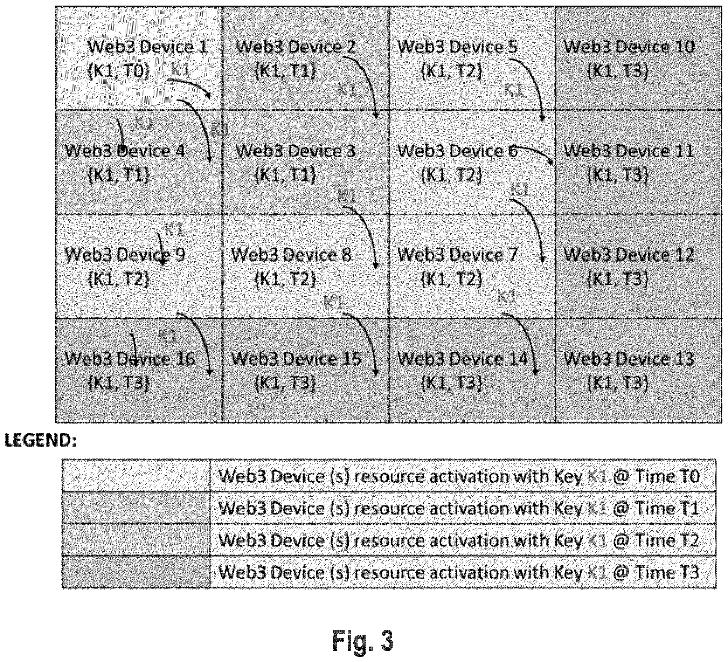

Fig. 3 shows a schematic diagram of a gossip protocol-based resource activation, e.g., of a gossip protocol-based efficient Intel On-Demand Resource Activation across Web3 Peers. Initial publisher (s) might be able to measure the actual resource consumption and with the estimates for scalability can communicate to peers via Gossip protocol for efficient scalability. As shown in Fig. 3, a first Web3 Device (Web3 Device 1) having Key K1 at time T0 uses the gossip protocol to notify devices 2-4 to perform resource activation according to key K1 at T1. Devices 2-4 use the gossip protocol to notify devices 5-9 to perform resource activation according to key K1 at T2. Devices 5-0 use the gossip protocol to notify devices 10-16 to perform resource activation according to key K1 at T3.

Each node provides a promise of available capabilities, but if the result is not met, the reputation of that node goes down (depending on the kind of failure). When the reputation index of a node goes to 0, the device may be excluded from the network. The incentive of participating is to obtain a portion of the fee paid by the Web3 user. Capabilities and reputation may be stored on the blockchain. Capabilities may be added to the blockchain when a node is added to the network, including specific information on the firmware/software stack used for each capability, including its version. The reputation of a node can be increased or decreased depending on positive or negative results influenced on the reliability level. The level of increment or decrease may depend on the type of requirement (e.g., not protecting the data on a confidential scenario is worth a high decrease on the reputation level).

With the selected nodes, and by using the exposed underlying hardware features, the operation is performed, and the result may be compared between the group of devices. The idea is not just about security as it may expose performance capabilities (e.g., cores vs efficient cores; accelerators), or even capacity (increase of memory).

Fig. 4 shows a schematic diagram of a use case with heterogeneous capabilities that can be made homogenous. In Fig. 4, five nodes 401, 402, 403, 404 and 40N are shown. Of these nodes, Nodes 1, 4 and N have the SGX capability, i.e., they can provide a trusted execution environment. If a smart contract 410 promises to provide confidential compute for a Web3 App 420 via a number of nodes 401-40N, on-demand activation, e.g., using Intel^{®} OnDemand, may be used to enable SGX on nodes 2 and 3, e.g., via a gossip protocol and the blockchain.

For example, the smart contract may provide a query for execution fees on a specific feature, such as confidential computing. The query may return options (supporting the feature/capability), and the smart contract may prioritize nodes with a higher reputation (based on past execution, consensus). Requirements may be added to the query using a specific option. For example, if a medical app calls an API (Application Programming Interface) analyzeHealthData(privateData, type: Confidential), the type: Confidential may be the requirement.

For example, Web3 applications executing smart contracts running in networks such as Ethereum (using a layer 2 approach), may use a critical hardware feature for the use case (such as confidentiality) to achieve a certain level of extra security, which costs a premium fee (using SGX). Nodes with Confidential capabilities, as identified and confirmed by consensus, may offer their service and a subset of them may be selected depending on the task to perform. The fee may be provided to winning nodes, and they take/execute the transaction. The fee may be kept by the respective nodes only if the validated result is ok.

In some examples, not only the existence of a capability may be of interest (to fulfill the requirement), but also the quality of service of the capability. For example, while nodes 1, 4 and N advertise confidential computing capabilities/resources during the join process, different nodes may support different versions/levels of confidential computing. For example, Node 1 may support SGX v1.1 - up to date. The technology may be considered ok, resulting in a good reputation score. Node 4 may support SGX v0.8, which may be considered too old, resulting in a low reputation score. Node N may support SGX v1.1 - up to date. The technology may be considered ok, resulting in a good reputation score.

On scenarios in which confidential computing is a must have, and when the network may have rogue nodes, all received private data for executing an action may use homomorphic encryption (if possible) as a mitigation. If a rogue node is detected, the node may be excluded immediately.

The proposed concept can become a more dynamic mechanism by including Software Defined Silicon (SDSi, such as Intel^{®} OnDemand) into the equation. Intel^{®} OnDemand provides a flexible consumption mechanism with the ability to scale performance and capacity in response to real time demand, but this is intended more as a one-time process required for the resource entitlement. In the proposed concept, the mechanism may be highly dynamic, enabling capabilities on a need-basis, meaning that if the web3 application requires the execution of a certain heavy workload and there is no capacity available, this feature may be considered during the bidding process, even at a higher cost, temporarily activating a capability (e.g., extra cores). Prediction of higher capacity needed may be used as an expansion to this, proactively increasing resource availability (through SDSi) based on past utilization / current trends.

Platform TEE may be leveraged for effective policy based "Synchronous Intel OnDemand" and may be enforced via metering across the cluster.

The present disclosure describes how interfaces in smart contracts allow the specification of requirements to be provided by Web3 applications in a structured way. These requirements may enable a bidding process between the nodes which include the required capability and provide the more convenient fee and reputation, which will be defined/selected by consensus (time with high reputation is another important factor to consider, since a relatively new device with high reputation is not the same as a device with a year with high reputation). The bidding process may end with the selection of a group of devices, mainly to validate the results, depending on the requirement. The number of devices required for the operation may consider that part of them may not respond in time, but either way, the rest of them may be sufficient for having a consensual result.

Fig. 5 shows a diagram of an operational flow for on-boarding and resource activation of a new node using a peer consensus mechanism. For initial verification, a t0, a new node (x) 510 tries to join the (blockchain) network. In operation 1, it advertises its capabilities (a), e.g., to the smart contract 520. At operation 2a, audit nodes 530 are found/selected (for node x, capabilities a, and for a time interval 11-12, in which the capabilities of the new node x are tested in an asynchronous manner. At operation 2b, the verifier (audit nodes) are obtained for verifying capabilities a. At operation 3, the audit nodes 530 verify the capabilities of node x. At operation 4, the audit nodes reach a result consensus. At operation 5, the result of the verification of x is provided by the audit nodes 530 to the smart contract 520. At operation 6, the result for x is stored, by the smart contract 520, in the blockchain 540. The blockchain 540 includes information on a reputation of nodes, and information on verifiers (a, b, c).

In addition to initial verification, random verification may be performed. A scheduler may be used to trigger a Web3 administration application 550 at tN, which triggers the smart contract to check a random node with certain capabilities, e.g., a node y with upgraded firmware/software stack/configuration, to determine whether the capability is still trusted.

The auditing of advertised capabilities may thus happen on each node join, but also during runtime at any random time, considering node's software, firmware and/or configurations may have evolved or changed. For scalability reasons, this may be done randomly and not checked all the time.

In Fig. 5, the reputation of the nodes is stored in the blockchain, and the verifiers as well. The catalog of verifiers may provide recipes to execute in audited nodes to validate that the advertised capabilities are true, going into details such as stack version, or signature of components. For example, if node x claims to have the SGX 1.1 capability, it may be ensured that the plat form vendor (Intel) has signed the drivers required for that functionality. Therefore, the recipe may include a method (e.g., one or more scripts) to verify this.

The proposed concept may provide a key differentiator in a technology segment in which hardware is mostly abstracted, so it will help foster the use of capabilities in various areas, such as security. For example, the proposed concept may be used as part of fleet management, which may provide service-based revenue for both the hardware vendor (for synchronous unlock of platform capabilities) and the operator of the software (for performing the task), with an audit trail on the blockchain. The mechanism may help fill the gap on system level requirements when there are not enough nodes with the same capabilities to participate in Web3 adhoc transactions.

Various examples of the proposed concept may be employed by providers on the edge segment. As important blockchain networks are moving towards proof of stake, smaller and more heterogenous nodes can be used instead of big powerful appliances based on field-programmable gate arrays, application-specific integrated circuits, or GPUs.

More details and aspects of the concept for synchronous on-demand capabilities are mentioned in connection with the proposed concept or one or more examples described above or below (e.g., Fig. 1a to 2b). The concept for synchronous on-demand capabilities may comprise one or more additional optional features corresponding to one or more aspects of the proposed concept, or one or more examples described above or below.

In the following, some examples of the proposed concept are provided:

An example (e.g., example 1) relates to a method for distributing tasks to Web3 peers (200) of a blockchain network, the method comprising identifying (110), during execution of a smart contract (105), a plurality of tasks to be performed by one or more peers of the blockchain network. The method comprises determining (150) capabilities of the peers of the blockchain network, wherein at least one capability of at least one peer of the blockchain network is unlocked as an on-demand unlock of the capability at the respective peer. The method comprises distributing (160) the plurality of tasks to the one or more peers based on the capabilities of the peers of the blockchain network.

Another example (e.g., example 2) relates to a previously described example (e.g., example 1) or to any of the examples described herein, further comprising that the capabilities includes at least one of one or more computational capabilities, one or more memory-based capabilities and one or more transmission bandwidth-based capabilities.

Another example (e.g., example 3) relates to a previously described example (e.g., one of the examples 1 to 2) or to any of the examples described herein, further comprising that the method comprises obtaining (130) information on a price to be paid by the smart contract to the peers of the blockchain network for the respective tasks, wherein the price of the at least one peer is based on a cost of the on-demand unlock of the capability at the respective peer, and the plurality of tasks being distributed further based on the price to be paid by the smart contract to the peers of the blockchain network for the respective tasks.

Another example (e.g., example 4) relates to a previously described example (e.g., example 3) or to any of the examples described herein, further comprising that the method comprises requesting (120) the information on the price to be paid for the respective tasks from at least a subset of peers of the blockchain network using a gossip protocol.

Another example (e.g., example 5) relates to a previously described example (e.g., one of the examples 1 to 4) or to any of the examples described herein, further comprising that the method comprises obtaining (140) information on a reputation of the peers of the blockchain network, the plurality of tasks being distributed further based on the reputation of the peers of the blockchain network.

Another example (e.g., example 6) relates to a previously described example (e.g., example 5) or to any of the examples described herein, further comprising that the reputation of the peers is based on a performance of the peers during previous tasks.

Another example (e.g., example 7) relates to a previously described example (e.g., one of the examples 5 to 6) or to any of the examples described herein, further comprising that the reputation of the peers is obtained according to information on a completion of previous tasks stored on a distributed ledger of the blockchain network.

Another example (e.g., example 8) relates to a previously described example (e.g., one of the examples 5 to 7) or to any of the examples described herein, further comprising that a reputation of a peer is based on a reputation score, the reputation score of a peer starting with a default reputation score, the reputation score being increased after successful completion of a task and being decreased after a failure to complete a task in time.

Another example (e.g., example 9) relates to a previously described example (e.g., example 8) or to any of the examples described herein, further comprising that a peer is removed from consideration for distributing tasks if the reputation score falls below a threshold value.

Another example (e.g., example 10) relates to a previously described example (e.g., one of the examples 1 to 9) or to any of the examples described herein, further comprising that the capabilities of a peer are based on an evaluation of an evaluation task being performed by the peer, the evaluation being performed by a randomly selected evaluation peer of the blockchain network.

Another example (e.g., example 11) relates to a previously described example (e.g., example 10) or to any of the examples described herein, further comprising that prior to evaluation of the evaluation task, the capabilities of the peer are based on a prediction of the capabilities of the peer based on hardware of the peer.

Another example (e.g., example 12) relates to a previously described example (e.g., example 11) or to any of the examples described herein, further comprising that the prediction of the capabilities of the peer is based on a machine-learning model for predicting the capabilities of the peer based on the hardware of the peer.

Another example (e.g., example 13) relates to a previously described example (e.g., example 12) or to any of the examples described herein, further comprising that the machine-learning model is trained using federated learning.

An example (e.g., example 14) relates to a method for a peer (200) of a blockchain network, the method comprising obtaining (250) a task to be performed by the peer from a smart contract (105). The method comprises unlocking (260) a capability of the peer using an on-demand unlock of the capability. The method comprises performing (270) the task using the unlocked capability.

Another example (e.g., example 15) relates to a previously described example (e.g., example 14) or to any of the examples described herein, further comprising that the capability is unlocked temporarily for the duration of the task.

Another example (e.g., example 16) relates to a previously described example (e.g., one of the examples 14 to 15) or to any of the examples described herein, further comprising that the capability being unlocked is a hardware capability of the peer.

Another example (e.g., example 17) relates to a previously described example (e.g., one of the examples 14 to 16) or to any of the examples described herein, further comprising that the method comprises obtaining (230) a request for providing information on a price to be paid for performing the task from the smart contract and providing (240) the information on the price to be paid for performing the task to the smart contract, with the task to be performed being obtained in response to the provided information on the price to be paid for performing the task.

Another example (e.g., example 18) relates to a previously described example (e.g., example 17) or to any of the examples described herein, further comprising that the method comprises determining (235) the information on the price to be paid for performing the task based on a cost of the on-demand unlock of the capability.

Another example (e.g., example 19) relates to a previously described example (e.g., one of the examples 14 to 18) or to any of the examples described herein, further comprising that the method comprises providing (210) information on a hardware of the peer for the smart contract, with the task to be performed being obtained based on a prediction of capabilities of the peer, the prediction being based on the information on the hardware of the peer.

Another example (e.g., example 20) relates to a previously described example (e.g., one of the examples 14 to 19) or to any of the examples described herein, further comprising that the method comprises performing (220) an evaluation task, with the task to be performed being obtained based on capabilities of the peer, the capabilities of the peer being based on an evaluation of the evaluation task performed by the peer.

Another example (e.g., example 21) relates to a previously described example (e.g., one of the examples 14 to 20) or to any of the examples described herein, further comprising that the method comprises storing information on a completion of the task on a distributed ledger of the blockchain network after performing the task.

An example (e.g., example 22) relates to an apparatus (10) comprising interface circuitry (12), machine-readable instructions, and processor circuitry (14) to execute the machine-readable instructions to perform the method according to one of the examples 1 to 13 (or according to any other example).

An example (e.g., example 23) relates to an apparatus (10) comprising processor circuitry (14) configured to perform the method according to one of the examples 1 to 13 (or according to any other example).

An example (e.g., example 24) relates to a device (10) comprising means for processing (14) for performing the method according to one of the examples 1 to 13 (or according to any other example).

An example (e.g., example 25) relates to a peer (100) for a blockchain network, the peer comprising the apparatus (10) or device (10) according to one of the examples 22 to 24 (or according to any other example).

An example (e.g., example 26) relates to an apparatus (20) comprising interface circuitry (22), machine-readable instructions, and processor circuitry (24) to execute the machine-readable instructions to perform the method according to one of the examples 14 to 21 (or according to any other example).

An example (e.g., example 27) relates to an apparatus (20) comprising processor circuitry (24) configured to perform the method according to one of the examples 14 to 21 (or according to any other example).

An example (e.g., example 28) relates to a device (20) comprising means for processing (24) for performing the method according to one of the examples 14 to 21 (or according to any other example).

An example (e.g., example 29) relates to a peer (200) for a blockchain network, the peer comprising the apparatus (20) or device (20) according to one of the examples 26 to 28 (or according to any other example).

An example (e.g., example 30) relates to a system comprising an apparatus (10) or device (10) according to one of the examples 22 to 24 (or according to any other example) and the apparatus (20) or device (20) according to one of the examples 26 to 28 (or according to any other example).

An example (e.g., example 31) relates to a system comprising a peer (100) according to example 25 (or according to any other example) and one or more further peers (200) according to example 29 (or according to any other example).

An example (e.g., example 32) relates to a non-transitory, computer-readable medium comprising a program code that, when the program code is executed on a processor, a computer, or a programmable hardware component, causes the processor, computer, or programmable hardware component to perform the method of one of the examples 1 to 13 (or according to any other example) or the method of one of the examples 14 to 21 (or according to any other example).

An example (e.g., example 33) relates to a non-transitory machine-readable storage medium including program code, when executed, to cause a machine to perform the method of one of the examples 1 to 13 (or according to any other example) or the method of one of the examples 14 to 21 (or according to any other example).

An example (e.g., example 34) relates to a computer program having a program code for performing the method of one of the examples 1 to 13 (or according to any other example) or the method of one of the examples 14 to 21 (or according to any other example) when the computer program is executed on a computer, a processor, or a programmable hardware component.

An example (e.g., example 35) relates to a machine-readable storage including machine readable instructions, when executed, to implement a method or realize an apparatus as claimed in any pending claim or shown in any example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor, or other programmable hardware component. Thus, steps, operations, or processes of different ones of the methods described above may also be executed by programmed computers, processors, or other programmable hardware components. Examples may also cover program storage devices, such as digital data storage media, which are machine-, processor- or computer-readable and encode and/or contain machine-executable, processor-executable, or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A method for distributing tasks to Web3 peers of a blockchain network, the method comprising:
identifying, during execution of a smart contract, a plurality of tasks to be performed by one or more peers of the blockchain network;
determining capabilities of the peers of the blockchain network, wherein at least one capability of at least one peer of the blockchain network is unlocked as an on-demand unlock of the capability at the respective peer; and
distributing the plurality of tasks to the one or more peers based on the capabilities of the peers of the blockchain network.

2. The method according to claim 1, wherein the capabilities includes at least one of one or more computational capabilities, one or more memory-based capabilities and one or more transmission bandwidth-based capabilities.

3. The method according to one of the claims 1 or 2, wherein the method comprises obtaining information on a price to be paid by the smart contract to the peers of the blockchain network for the respective tasks, wherein the price of the at least one peer is based on a cost of the on-demand unlock of the capability at the respective peer, and the plurality of tasks being distributed further based on the price to be paid by the smart contract to the peers of the blockchain network for the respective tasks.

4. The method according to claim 3, wherein the method comprises requesting the information on the price to be paid for the respective tasks from at least a subset of peers of the blockchain network using a gossip protocol.

5. The method according to one of the claims 1 to 4, wherein the method comprises obtaining information on a reputation of the peers of the blockchain network, the plurality of tasks being distributed further based on the reputation of the peers of the blockchain network, the reputation of the peers being based on a performance of the peers during previous tasks.

6. The method according to claim 5, wherein the reputation of the peers is obtained according to information on a completion of previous tasks stored on a distributed ledger of the blockchain network.

7. The method according to one of the claims 5 or 6, wherein a reputation of a peer is based on a reputation score, the reputation score of a peer starting with a default reputation score, the reputation score being increased after successful completion of a task and being decreased after a failure to complete a task in time.

8. The method according to one of the claims 1 to 7, wherein the capabilities of a peer are based on an evaluation of an evaluation task being performed by the peer, the evaluation being performed by a randomly selected evaluation peer of the blockchain network.

9. The method according to claim 8, wherein, prior to evaluation of the evaluation task, the capabilities of the peer are based on a prediction of the capabilities of the peer based on hardware of the peer, the prediction of the capabilities of the peer being based on a machine-learning model for predicting the capabilities of the peer based on the hardware of the peer, the machine-learning model being trained using federated learning.

10. A non-transitory, computer-readable medium comprising a program code for a peer of a blockchain network that, when the program code is executed on a processor, a computer, or a programmable hardware component, causes the processor, computer, or programmable hardware component to perform a method comprising:
obtaining a task to be performed by the peer from a smart contract;
unlocking a capability of the peer using an on-demand unlock of the capability; and
performing the task using the unlocked capability.

11. The non-transitory, computer-readable medium according to claim 10, wherein the capability is unlocked temporarily for the duration of the task.

12. The non-transitory, computer-readable medium according to one of the claims 10 or 11, wherein the capability being unlocked is a hardware capability of the peer.

13. The non-transitory, computer-readable medium according to one of the claims 10 to 12, wherein the method comprises obtaining a request for providing information on a price to be paid for performing the task from the smart contract and providing the information on the price to be paid for performing the task to the smart contract, with the task to be performed being obtained in response to the provided information on the price to be paid for performing the task.

14. The non-transitory, computer-readable medium according to one of the claims 10 to 13, wherein the method comprises providing information on a hardware of the peer for the smart contract, with the task to be performed being obtained based on a prediction of capabilities of the peer, the prediction being based on the information on the hardware of the peer.

15. An apparatus comprising interface circuitry, machine-readable instructions, and processor circuitry to execute the machine-readable instructions to perform the method according to one of the claims 1-9 or execute the computer code stored on a non-transitory, computer-readable medium according to one of the claims 10 to 14.
